# EUROPÄISCHE PATENTSCHRIFT

(11) **EP 1 744 147 B1**
(45) Veröffentlichungstag und Bekanntmachung des Hinweises auf die Patenterteilung: **09.12.2009**
(21) Anmeldenummer: 05015190.1
(22) Anmeldetag: 13.07.2005
(51) Int. Cl.: G01N 21/88

(54) **Verfahren und Vorrichtung zur optischen Prüfung von Carbon-Keramik-Brems- und Kupplungskomponenten**
Method and device for optical testing of carbon ceramic brake and clutch components
Procédé et dispositif pour le contrôle optique de parties composantes de freins et d'embrayages en céramique à carbone

(43) Veröffentlichungstag der Anmeldung: 17.01.2007
(73) Patentinhaber: AUDI AG, 85045 Ingolstadt (DE); Automation W+R GmbH, 80992 München (DE)
(72) Erfinder: Clasen, Ralf Automation W+R GmbH, 80639 München (DE); Steib, Sven Automation W+R GmbH, 80639 München (DE); Kierner, Manfred Automation W+R GmbH, 80639 München (DE); Kotsch, Werner Automation W+R GmbH, 80639 München (DE); Müller, Karl-Heinz, 86637 Wertingen (DE); Patschicke, Norbert, 86153 Augsburg (DE); Wendel, Steffen, 86554 Echsheim (DE)
(74) Vertreter: Deckers, Hellmuth Alexander

(56) Entgegenhaltungen:
- WO-A-94/27198
- WO-A-03/069182
- DE-A1- 10 232 781
- IT-B- 182 278
- US-A- 5 726 705
- US-A1- 2005 018 897

## Beschreibung

Die Erfindung betrifft ein Verfahren zur optischen Prüfung von Carbon-Keramik-Brems- und Kupplungskomponenten und eine dazu angepaßte Vorrichtung.

Carbon-Keramik-Brems- und Kupplungskomponenten werden aus einem keramischen Verbundwerkstoff gefertigt, der Carbonfasem als Verstärkungsfasern und eine Matrix enthält, die im wesentlichen aus Siliciumcarbid, und geringeren Anteilen von Kohlenstoff und Silicium besteht.

Sie umfassen üblicherweise einen Kern- oder Tragkörper in Form einer Zylinderring-Scheibe mit einer Boden- und einer Deckfläche (auch gemeinsam als "Deckflächen" bezeichnet), wobei auf mindestens einer der Deckflächen eine Reibschicht aufgebracht ist. Die Zusammensetzung des Werkstoffs der Reibschicht kann sich von der des Werkstoffs des Tragkörpers unterscheiden. Der Tragkörper weist im Fall von Bremsscheiben bevorzugt Lüftungskanäle parallel zu den Deckflächen auf, es können weiter in den Bremsscheiben Bohrungen angebracht sein, die parallel zur Achse die gesamte Bremsscheibe durchdringen, sich also von einer Deckfläche bis zur gegenüberliegenden Deckfläche erstrecken.

Für die Qualitätssicherung von Bedeutung sind insbesondere die Dicke der Reibschicht und ihre Schwankung über die Deckfläche, die Verteilung der bei Abkühlen nach der Keramisierung entstehenden Entspannungsrisse, die Freiheit der Bohrungen von Ausbrüchen, die Freiheit der Reibschicht von Ausbrüchen auf ihrer Oberfläche, und die Freiheit von Randausbrüchen im Bereich der Stege (massive Zonen zwischen jeweils zwei Lüftungskanälen im Tragkörper) und der Befestigungsbohrungen für den Topf, mit dessen Hilfe die Carbon-Keramik-Bremsscheibe mit der Fahrzeugachse verbunden wird.

Diese Größen und Fehlerhäufigkeiten werden bei der Bauteilprüfung gemäß einem Prüfplan erfaßt und dokumentiert.

Es ist wünschenswert, eine derartige Prüftätigkeit zu automatisieren, um eine objektive Bewertung von Fehlern und deren Häufigkeiten zu sichern und die Genauigkeit der Messungen durch Eliminieren von menschlichen Beobachtungs- und Ablesefehlern zu verbessern.

Bei den Versuchen, die zu der vorliegenden Erfindung geführt haben, wurde jedoch festgestellt, daß die üblichen Methoden der Bilderfassung und -auswertung bei den Carbon-Keramik-Brems- und Kupplungskomponenten versagen, da die schwarzgrauen Oberflächen nur wenig Licht reflektieren und dadurch das Signal-Rausch-Verhältnis der erhaltenen Meßgrößen soweit verringert wird, daß die Präzision der Messungen ungenügend wird.

Es besteht daher die Aufgabe, ein Verfahren zur Bilderfassung und -auswertung bereitzustellen, das auch bei Meßkörpern mit dunkler Farbe und daher geringer Reflexion Meßwerte mit genügend hohem Signal-Rausch-Verhältnis ergibt. Eine weitere Aufgabe ist, eine zu diesem Verfahren geeignete Vorrichtung bereitzustellen.

Aus der veröffentlichten Patentanmeldung US 2005/0018897 A1 ist ein Apparat zur Prüfung von Anzeigetafeln bekannt, der einen Tisch mit Halterung für die Anzeigetafel und eine drehbare Aufhängung für Kameras umfaßt, die mit mindestens einer Kamera bestückt ist. Die Anzeigetafeln enthalten eine Hintergrundbeleuchtung.

Aus der WO 94/27198 ist ein Reproduktionssystem für dreidimensionale Objekte bekannt, bei dem zunächst diese Objekte in Gestalt und Farben erfaßt und die erzeugten Daten gespeichert werden, und dann Reproduktionen mit durch Computer gesteuerten Bearbeitungsmaschinen unter Nutzung der gespeicherten Daten hergestellt werden. Zur Erfassung werden Kamerapaare eingesetzt für stereoskopische Aufnahmen.

Aus der Patentschrift US 6,411,377 B1 ist ein Verfahren bekannt, bei dem Fremdpartikel auf einem strukturierten Halbleitersubstrat detektiert werden, indem die Oberfläche des Substrats mit einer Kombination von Laserlicht und weißem Licht (einer Glühbirne) im Schrägeinfall beleuchtet wird, und das gestreute Licht in einem Winkel β von der Normalen auf die Oberfläche gemessen wird. Über die Wahl des Winkels β wird keine Angabe gemacht.

Aus dem Europäischen Patent 0 426 166 B1 ist bekannt, die Oberfläche eines strukturierten Halbleiter-Substrats auf Fehler zu untersuchen, indem sie von oben (d. i. in Richtung der Normalen auf die Fläche) im wesentlichen gleichmäßig beleuchtet wird, und benachbarte Strukturen auf ihre Übereinstimmung geprüft werden, wobei das Verfahren der sog. "time delay integration" benutzt wird.

Die genannten Verfahren basieren auf dem Vergleich einer derartigen Struktur mit einem vorgegebenen Sollwert, und im zweiten Fall dem Vergleich mit dem Ergebnis der vorangehenden Messung, wobei die Strukturen nur räumlich eng begrenzte Zonen entsprechend der üblichen Chip-Größe (beispielsweise ca. 25,4 mm × 25,4 mm) ausmachen. Da die Oberfläche von Silicium-Wafern stark spiegelnd ist, ergibt sich die Anordnung von Beleuchtung und Kamera (Bilderfassung) aus dem Reflexionsgesetz.

Zur Messung von Unregelmäßigkeiten in größeren Meßfeldern und bei Substraten mit erheblich geringerer Reflexion läßt sich kein Hinweis aus diesen Dokumenten entnehmen.

Die IT 182 278 B beschreibt ein Verfahren und Vorrichtung zur optischen Prüfung von Zylinderringscheiben von Scheibenbremsen. Die Vorrichtung umfasst mehrere CCD-Zeilenkameras mit jeweils 1024 Pixeln pro Zeile, die in einem Abstand von ca. 60 cm vom Werkstück angeordnet sind. Zur Beleuchtung sind Lampen vorgesehen, die Licht unter einem Beleuchtungswinkel von 15° zur Rotationsachse des Werkstücks einstrahlen. Die optischen Achsen der Kameras sind parallel zu den Flächennormalen der inspizierten Flächen.

Es wurde nun gefunden, daß eine Kombination von speziell angepaßter Beleuchtung und der Wahl eines engen Bereichs für den Beobachtungswinkel Meßwerte mit günstigem Signal-Rausch-Verhältnis auch bei geringer Reflexion des Substrats ergibt.

Gegenstand der Erfindung ist daher ein Verfahren zur optischen Qualitätsprüfung von Carbon-Keramik-Brems- und Kupplungskomponenten, bei dem
(a) zur Bestimmung von Oberflächenfehlern in der Reibschicht (Fehlern in der Reibfläche) die Reibfläche durch Auflicht in einem Winkel von höchstens 7°, bevorzugt höchstens ± 5°, zwischen der Beleuchtungsrichtung und der optischen Achse der Kamera im Hellfeld durch eine Gasentladungslampe beleuchtet wird, in einem Abstand der Lampe vom zu prüfenden Werkstück von 70 mm bis 110 mm, und einer Lampenkörperlänge von 420 mm bis 520 mm, wobei die Detektion durch eine CCD-Zeilenkamera mit einer mittleren Auflösung von höchstens 0,12 mm erfolgt, die Anzahl der Pixel in der CCD-Zeile mindestens 1000 beträgt, der Winkel der optischen Achse der Kamera zur Flächennormalen 18° bis 26° beträgt, und das Gesichtsfeld der Kamera bis zu 120 mm beträgt,
(b) zur Bestimmung der Reibschichtdicke und von Fehlern auf der äußeren Umfangsfläche diese Umfangsfläche durch Auflicht in einem Winkel von 15 ° bis 25°, bevorzugt 17° bis 23°, zwischen der Beleuchtungsrichtung und der optischen Achse der Kamera durch eine Gasentladungslampe im Hellfeld beleuchtet wird, in einem Abstand der Lampe vom zu prüfenden Werkstück von 10 mm bis 30 mm, und einer Lampenkörperlänge von 150 mm bis 230 mm, wobei die Detektion durch eine CCD-Zeilenkamera mit einer mittleren Auflösung von höchstens 0,03 mm erfolgt, die Anzahl der Pixel in der CCD-Zeile mindestens 2000 beträgt, der Winkel der optischen Achse der Kamera zur Flächennormalen der Umfangsfläche 30° bis 38° beträgt, und das Gesichtsfeld der Kamera bis zu 50 mm beträgt,
(c) zur Bestimmung von Fehlern auf der Innenfläche diese Innenfläche durch Auflichtin einem Winkel von bis 35°, bevorzugt 27° bis 33°, zwischen der Beleuchtungsrichtung und der optischen Achse der Kamera durch eine Gasentladungslampe im Hellfeld beleuchtet wird, in einem Abstand der Lampe vom zu prüfenden Werkstück von 70 mm bis 130 mm, und einer Lampenkörperlänge von 420 mm bis 520 mm, wobei die Detektion durch eine CCD-Zeilenkamera mit einer mittleren Auflösung von höchstens 0,1 mm erfolgt, die Anzahl der Pixel in der CCD-Zeile mindestens 1000 beträgt, der Winkel der optischen Achse der Kamera zur Flächennormalen 70° bis 78° beträgt und das Gesichtsfeld der Kamera bis zu 100 mm beträgt, und
(d) zur Bestimmung von Fehlern oder Ausbrüchen in zylindrischen Bohrungen diese von der der Kamera gegenüberliegenden Seite mit lichtemittierenden Dioden in rotem Licht durchleuchtet werden, in einem Abstand der LEDs vom zu prüfenden Werkstück von 40 mm bis 80 mm, und einer Lampenkörperfläche von 100 mm × 80 mm bis 140 mm × 100 mm, mit der optischen Achse der Kamera in einem Winkel zur Zylinderachse der Bohrungen von höchstens ± 1°, bevorzugt höchstens 0,5 °, wobei die Detektion durch eine CCD-Flächenkamera mit einer mittleren Auflösung von höchstens 0,15 mm erfolgt, die Anzahl der Pixel in der CCD-Fläche mindestens 640 × 512 beträgt, und das Gesichtsfeld der Kamera bis zu 150 mm × 100 mm beträgt.

Die mittlere Auflösung ist jeweils die am zu prüfenden Werkstück bestimmte Auflösung. Dabei werden zu Beleuchtung in den Fällen (a) bis (c) Gasentladungslampen eingesetzt, wobei diese bevorzugt in den Fällen (b) und (c) doppelt gewendelt sind. Der Arbeitsabstand der Kamera zu dem zu prüfenden Werkstück beträgt bevorzugt im Fall (a) ca. 300 mm bis 350 mm, im Fall (b) ca. 60 mm bis 120 mm, im Fall (c) ca. 240 mm bis 340 mm, und im Fall (d) 250 mm bis 350 mm. Im Fall (d) hat es sich als besonders günstig erwiesen, anstelle von Gasentladungslampen lichtemittierende Dioden, vorzugsweise rot leuchtende Dioden im sogenannten "strobe"-Betrieb, einzusetzen, die bevorzugt im Takt von 5 Hz Lichtblitze von ca. 1 ms Dauer erzeugen.

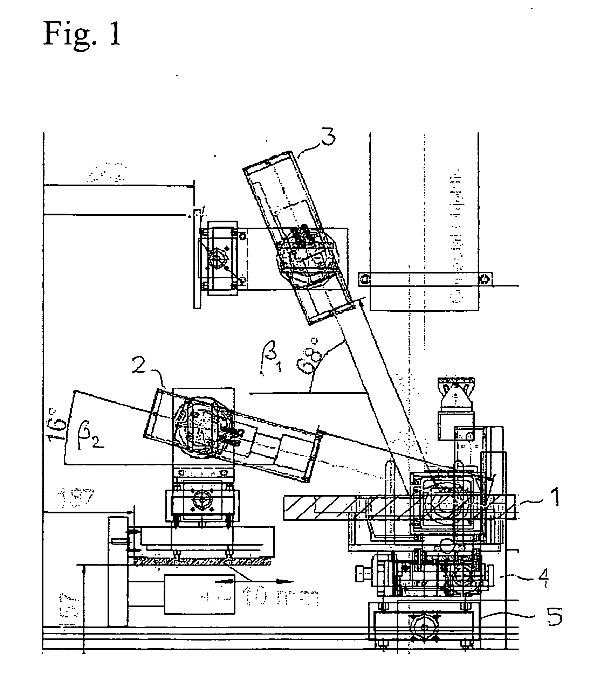

Eine geeignete Vorrichtung ist in der Fig. 1 dargestellt. Zur optischen Qualitätsprüfung wird eine optische Bank 4 eingesetzt, die auf einer Basis 5 justiert werden kann. Auf die Bank 4 wird das zu prüfende Werkstück 1 aufgespannt. In der Fig. 1 sind zwei Kamerastellungen 2 und 3 angedeutet, wobei
die Kamera in der Kamera-Halterung 2 für die Prüfung einer Innenfläche von Carbon-Keramik-Brems- und Kupplungskomponenten in Form von Zylinderringscheiben entsprechend der Prüfung (c) eine CCD-Zeilenkamera mit mindestens 1000 Pixeln in der CCD-Zeile ist, die so justierbar ist, daß ihre optische Achse einen Winkel mit der Flächennormale der Innenfläche des zu prüfenden Werkstücks 1 entsprechend dessen Aufspannung von 70° bis 78°, also einen mittleren Winkel *β*₂ mit der Oberfläche des zu prüfenden Werkstücks **1** von 16° einschließt, und der Abstand von der Oberfläche des zu prüfenden Werkstücks **1** entsprechend dessen Aufspannung 240 mm bis 340 mm beträgt, und zur Beleuchtung eine Gasentladungslampe mit einer Lampenkörperlänge von 420 mm bis 520 mm vorgesehen ist, mit einem Einstellungsbereich für den Abstand vom Werkstück entsprechend dessen Aufspannung von 70 mm bis 130 mm und für den Winkel der Beleuchtungsrichtung zur genannten optischen Achse von 25° bis 35°,
und die Kamera in der Kamera-Halterung (3) für die Prüfung der Oberfläche einer Reibschicht von Carbon-Keramik-Brems- und Kupplungskomponenten in Form von Zylinderringscheiben entsprechend der Prüfung (a) eine CCD-Zeilenkamera mit mindestens 1000 Pixeln in der CCD-Zeile ist, die so justierbar ist, daß ihre optische Achse einen Winkel mit der Flächennormale der Oberfläche der Reibschicht des zu prüfenden Werkstücks(1) entsprechend dessen Aufspannung von 18° bis 26° einschließt, entsprechend einem mittleren Winkel β₁ von 68° zur oberfläche des zu prüfenden Werkstücks (1), und der Abstand von der Oberfläche des zu prüfenden Werkstücks (1) entsprechend dessen Aufspannung 300 mm bis 350 mm beträgt, wobei zur Beleuchtung eine Gasentladungslampe mit einer Lampenkörperlänge von 420 mm bis 520 mm vorgesehen ist, mit einem Einstellunpbereich für den Abstand vom Werkstück entsprechend dessen Aufspannung von 70 mm bis 110 mm und für den Winkel der Beleuchtungsrichtung zur genannten optischen Achse von höchstens ± 7°.

Die örtliche Auflösung am zu prüfenden Werkstück wird durch die Auflösung der CCD-Zeile oder -Fläche und die Vergrößerung in der Kameraoptik bestimmt, wobei die oben bei der Beschreibung des Meßverfahrens genannten Werte jeweils die oberen bzw. unteren Grenzwerte sind. Dabei werden jeweils mindestens 128, bevorzugt 256 Graustufen erfaßt. Die Dauer der Messung mit EDV-gestützter Auswertung für ein zu prüfendes Werkstück beträgt in dem erfindungsgemäßen Verfahren ca. 2,5 Minuten, gegenüber ca. 23 Minuten bei der manuellen Messung mit manueller Auswertung. Es ergibt sich daher sowohl ein erheblich höherer Durchsatz in der Qualitätsprüfung, als auch eine verbesserte Objektivität, eine höhere Genauigkeit und Reproduzierbarkeit.

In überraschender Weise hat sich ergeben, daß mit der gewählten Geometrie (Lampenabstand und -winkel, Kameraabstand und -winkel) sämtliche Unregelmäßigkeiten insbesondere auf der Deckfläche (Meßverfahren (a), bei dem neben den genannten Ausbrüchen auf der Oberfläche auch Bearbeitungsspuren sowie Unregelmäßigkeiten in der Zusammensetzung, wie beispielsweise Verklumpung der Verstärkungsfasern, Silicium-Inseln) mit einer Einstellung in gleich guter und reproduzierbarer Weise zu erfassen sind.

## Patentansprüche

1. Verfahren zur optischen Qualitätsprüfung von Carbon-Keramik-Brems- und Kupplungskomponenten in Form von Zylinderringscheiben, bei dem
(a) zur Bestimmung von Oberflächenfehlern in der Reibschicht die Reibfläche durch Auflicht in einem Winkel von höchstens ± 7° zwischen der Beleuchtungsrichtung und der optischen Achse der Kamera im Hellfeld durch eine Gasentladungslampe beleuchtet wird, in einem Abstand der Lampe vom zu prüfenden Werkstück von 70 mm bis 110 mm, und einer Lampenkörperlänge von 420 mm bis 520 mm, wobei die Detektion durch eine CCD-Zeilenkamera mit einer mittleren Auflösung von höchstens 0,12 mm erfolgt, die Anzahl der Pixel in der CCD-Zeile mindestens 1000 beträgt, der Winkel der optischen Achse der Kamera zur Flächennormalen 18° bis 26° beträgt, und das Gesichtsfeld der Kamera bis zu 120 mm beträgt,
(b) zur Bestimmung der Reibschichtdicke und von Fehlern auf der äußeren Umfangsfläche diese Umfangsfläche durch Auflicht in einem Winkel von 15° bis 25° zwischen der Beleuchtungsrichtung und der optischen Achse der Kamera durch eine Gasentladungslampe im Hellfeld beleuchtet wird, in einem Abstand der Lampe vom zu prüfenden Werkstück von 10 mm bis 30 mm, und einer Lampenkörperlänge von 150 mm bis 230 mm, wobei die Detektion durch eine CCD-Zeilenkamera mit einer mittleren Auflösung von höchstens 0,03 mm erfolgt, die Anzahl der Pixel in der CCD-Zeile mindestens 2000 beträgt, der Winkel der optischen Achse der Kamera zur Flächennormalen der Umfangsfläche 30° bis 38° beträgt, und das Gesichtsfeld der Kamera bis zu 50 mm beträgt,
(c) zur Bestimmung von Fehlern auf der Innenfläche diese Innenfläche durch Auflicht in einem Winkel von 25° bis 35° zwischen der Beleuchtungsrichtung und der optischen Achse der Kamera durch eine Gasentladungslampe im Hellfeld beleuchtet wird, in einem Abstand der Lampe vom zu prüfenden Werkstück von 70 mm bis 130 mm, und einer Lampenkörperlänge von 420 mm bis 520 mm, wobei die Detektion durch eine CCD-Zeilenkamera mit einer mittleren Auflösung von höchstens 0,1 mm erfolgt, die Anzahl der Pixel in der CCD-Zeile mindestens 1000 beträgt, der Winkel der optischen Achse der Kamera zur Flächennormalen 70° bis 78° beträgt und das Gesichtsfeld der Kamera bis zu 100 mm beträgt, und
(d) zur Bestimmung von Fehlern oder Ausbrüchen in zylindrischen Bohrungen diese von der der Kamera gegenüberliegenden Seite mit lichtemittierenden Dioden in rotem Licht durchleuchtet werden, in einem Abstand der LEDs vom zu prüfenden Werkstück von 40 mm bis 80 mm, und einer Lampenkörperfläche von 100 mm × 80 mm bis 140 mm × 100 mm, mit der optischen Achse der Kamera in einem Winkel zur Zylinderachse der Bohrungen von höchstens ± 1°, wobei die Detektion durch eine CCD-Flächenkamera mit einer mittleren Auflösung von höchstens 0,15 mm erfolgt, die Anzahl der Pixel in.der CCD-Fläche mindestens 640 x 512 beträgt, und das Gesichtsfeld der Kamera bis zu 150 mm × 100 mm beträgt.

2. Vorrichtung zur optischen Qualitätsprüfung für Carbon-Keramik-Brems- und Kupplungskomponenten in Form von Zylinderringscheiben, umfassend eine optische Bank (4), die auf einer Basis (5) justiert werden kann, mit einer Aufspannvorrichtung für ein zu prüfendes Werkstück (1), und in justierbaren Kamera-Halterungen (2) und (3) gehaltenen Kameras, **dadurch gekennzeichnet, daß**
- die Kamera in der Kamera-Halterung (2) für die Prüfung einer Innenfläche von Carbon-Keramik-Brems- und Kupplungskomponenten in Form von Zylinderringscheiben eine CCD-Zeilenkamera mit mindestens 1000 Pixeln in der CCD-Zeile ist, die so justierbar ist, daß ihre optische Achse einen Winkel mit der Flächennormale der Innenfläche des zu prüfenden Werkstücks (1) entsprechend dessen Aufspannung von 70° bis 78°, also einen mittleren Winkel *β*₂ mit der Oberfläche des zu prüfenden Werkstücks (1) von 16° einschließt, und der Abstand von dem zu prüfenden Werkstück (1) entsprechend dessen Aufspannung 240 mm bis 340 mm beträgt, wobei zur Beleuchtung eine Gasentladungslampe mit einer Lampenkörperlänge von 420 mm bis 520 mm vorgesehen ist, mit einem Einstellungsbereich für den Abstand vom Werkstück entsprechend dessen Aufspannung von 70 mm bis 130 mm und für den Winkel der Beleuchtungsrichtung zur genannten optischen Achse von 25° bis 35°, und
- die Kamera in der Kamera-Halterung (3) für die Prüfung der Oberfläche einer Reibschicht von Carbon-Keramik-Brems- und Kupplungskomponenten in Form von Zylinderringscheiben eine CCD-Zeilenkamera mit mindestens 1000 Pixeln in der CCD-Zeile ist, die so justierbar ist, daß ihre optische Achse einen Winkel mit der Flächennormale der Oberfläche der Reibschicht des zu prüfenden Werkstücks (1) entsprechend dessen Aufspannung von 18° bis 26° einschließt, entsprechend einem mittleren Winkel *β*₁ von 68° zur Oberfläche des zu prüfenden Werkstücks (1), und der Abstand von dem zu prüfenden Werkstück (1) entsprechend dessen Aufspannung 300 mm bis 350 mm beträgt, wobei zur Beleuchtung eine Gasentladungslampe mit einer Lamperkörerlänge von 420 mm bis 520 mm vorgesehen ist, mit einem Emstellungsbereich für den Abstand vom Werkstück entsprechend dessen Aufspannung von 70 mm bis 110 mm und für den Winkel der Beleuchtungsrichtung zur genannten optischen Achse von höchstens ±7°.

## Claims

1. A method for optical quality testing of carbon ceramic brake and clutch components in the form of cylindrical annular plates, in the case of which
(a) in order to determine surface defects in the friction layer, a gas discharge lamp is used to illuminate the friction surface by incident light at an angle of at most ± 7° between the illumination direction and the optical axis of the camera in the bright field, this being done with the lamp at a spacing of from 70 mm up to 110 mm from the workpiece to be tested and a lamp body with a length of from 420 mm up to 520 mm, the detection being performed by a CCD line camera with a mean resolution of at most 0.12 mm, the number of the pixels in the CCD line being at least 1000, the angle of the optical axis of the camera to the surface normal being 18° to 26°, and the field of view of the camera being up to 120 mm,
(b) in order to determine the friction layer thickness and defects on the outer peripheral surface, a gas discharge lamp is used to illuminate this peripheral surface by incident light at an angle of from 15° up to 25° between the illumination direction and the optical axis of the camera in the bright field, this being done with the lamp at a spacing of from 10 mm up to 30 mm from the workpiece to be tested and a lamp body with a length of from 150 mm up to 230 mm, the detection being performed by a CCD line camera with a mean resolution of at most 0.03 mm, the number of the pixels in the CCD line being at least 2000, the angle of the optical axis of the camera to the surface normal of the peripheral surface being 30° to 38°, and the field of view of the camera being up to 50 mm,
(c) in order to determine defects on the inner surface, the gas discharge lamp is used to illuminate this inner surface by incident light at an angle of from 25° up to 35° between the illumination direction and the optical axis of the camera in the bright field, this being done with the lamp at a spacing of from 70 mm up to 130 mm from the workpiece to be tested and a lamp body with a length of from 420 mm up to 520 mm, the detection being performed by a CCD line camera with a mean resolution of at most 0.1 mm, the number of pixels in the CCD line being at least 1000, the angle of the optical axis of the camera to the surface normal being 70° to 78°, and the field of view of the camera being up to 100 mm, and
(d) in order to determine defects or missing pieces in cylindrical bores, light-emitting diodes are used to transilluminate said cylindrical bores in red light from the side opposite the camera, this being done with the LEDs at a spacing of from 40 mm to up to 80 mm from the workpiece to be tested and a lamp body with an area of from 100 mm × 80 mm up to 140 mm × 100 mm, and with the optical axis of the camera at an angle of at most ± 1° to the cylinder axis of the bores, the detection being performed by a CCD area camera with a mean resolution of at most 0.15 mm, the number of the pixels in the CCD surface being at least 640 × 512, and the field of view of the camera being up to 150 mm × 100 mm.

2. A device for optical quality testing for carbon ceramic brake and clutch components in the form of cylindrical annular plates, comprising an optical test bench (4) which can be adjusted on a base (5), having a clamping device for a workpiece (1) to be tested, and cameras held in adjustable camera holders (2) and (3), wherein
- the camera in the camera holder (2) for testing an inner surface of carbon ceramic brake and clutch components in the form of cylindrical annular plates is a CCD line camera with at least 1000 pixels in the CCD line which can be adjusted such that its optical axis encloses an angle to the surface normal of the inner surface of the workpiece (1) to be tested of from 70° up to 78°, corresponding to the clamping of said workpiece, that is to say a mean angle *β*₂ of 16° to the surface of the workpiece (1) to be tested, and that the spacing from the workpiece (1) to be tested is 240 mm to 340 mm, corresponding to the clamping of said workpiece, there being provided for the illumination a gas discharge lamp having a lamp body with a length of from 420 mm up to 520 mm and having a setting range of from 70 mm up to 130 mm for the spacing of the workpiece, corresponding to the clamping of said workpiece, and of from 25° up to 35° for the angle of the illumination direction to said optical axis, and
- the camera in the camera holder (3) for testing the surface of a friction layer of carbon ceramic brake and clutch components in the form of cylindrical annular plates is a CCD line camera with at least 1000 pixels in the CCD line which can be adjusted such that its optical axis encloses an angle to the surface normal of the surface of the friction layer of the workpiece (1) to be tested of from 18° up to 26°, corresponding to the clamping of said workpiece, corresponding to a mean angle *β*₁ of 68° to the surface of the workpiece (1) to be tested, and that the spacing from the workpiece (1) to be tested is 300 mm to 350 mm, corresponding to the clamping of said workpiece, there being provided for the illumination a gas discharge lamp having a lamp body with a length of from 420 mm up to 520 mm and having a setting range of from 70 mm up to 110 mm for the spacing of the workpiece, corresponding to the clamping of said workpiece, and of at most ±7° for the angle of the illumination direction to said optical axis.

## Revendications

1. Procédé pour le contrôle qualité optique de composants de freinage et d'embrayage en céramique à carbone sous forme de disques lisses de cylindre, dans le cadre duquel,
a) pour la détermination de défauts de surface de la couche de frottement, on éclaire la surface de frottement grâce à une lumière incidente présentant un angle maximal de ± 7° entre le sens d'éclairage et l'axe optique de la caméra dans le champ clair à l'aide d'une lampe à décharge, avec une distance entre la lampe et la pièce à usiner à contrôler allant de 70 mm à 110 mm et une longueur de corps de lampe allant de 420 mm à 520 mm, la détection se faisant à l'aide d'une caméra linéaire CCD d'une résolution moyenne d'un maximum de 0,12 mm, le nombre de pixels de la ligne CCD étant au moins de 1000, l'angle de l'axe optique de la caméra par rapport à la normale à une surface étant compris entre 18° et 26°, et le champ optique de la caméra allant jusqu'à 120 mm,
b) pour la détermination de l'épaisseur de la couche de frottement et de défauts sur la surface extérieure périphérique, on éclaire cette surface périphérique grâce à de la lumière incidente formant un angle allant de 15° à 25° entre le sens d'éclairage et l'axe optique de la caméra dans le champ clair à l'aide d'une lampe à décharge, avec une distance entre la lampe et la pièce à usiner à contrôler allant de 10 mm à 30 mm, et une longueur de corps de lampe allant de 150 mm à 230 mm, la détection se faisant à l'aide d'une caméra linéaire CCD d'une résolution moyenne d'un maximum de 0,03 mm, le nombre de pixels de la ligne CCD étant au moins de 2000, l'angle de l'axe optique de la caméra par rapport à la normale à une surface étant compris entre 30° et 38°, et le champ optique de la caméra allant jusqu'à 50 mm,
c) pour la détermination de défauts sur la surface interne, on éclaire cette surface interne dans le champ clair grâce à de la lumière incidente formant un angle allant de 25° à 35° entre le sens d'éclairage et l'axe optique de la caméra à l'aide d'une lampe à décharge, avec une distance entre la lampe et la pièce à usiner à contrôler allant de 70 mm à 130 mm, et une longueur de corps de lampe de 420 mm à 520 mm, la détection s'effectuant avec une caméra linéaire CCD d'une résolution moyenne d'un maximum de 0,1 mm, le nombre de pixels de la ligne CCD étant au moins de 1000, l'angle de l'axe optique de la caméra par rapport à la normale à une surface étant compris entre 70° et 78°, et le champ optique de la caméra allant jusqu'à 100 mm, et
d) pour la détermination de défauts ou éclatements dans des forures cylindriques, on éclaire ces dernières depuis le côté opposé à la caméra avec des diodes d'émission de lumière à lumière rouge, avec une distance entre les DEL et la pièce à usiner à contrôler allant de 40 mm à 80 mm, et une longueur de corps de lampe allant de 100 mm × 80 mm à 140 mm × 100 mm, avec un angle entre l'axe optique de la caméra et l'axe de cylindre des forures d'un maximum de ± 1°, la détection s'effectuant à l'aide d'une caméra matricielle CCD avec une résolution moyenne d'un maximum de 0,15 mm, le nombre de pixels de la matrice CCD étant au moins de 640 x 512, et le champ optique de la caméra allant jusqu'à 150 mm x 100 mm.

2. Dispositif pour le contrôle qualité optique de composants de freinage et d'embrayage en céramique à carbone sous forme de disques lisses de cylindre, comportant un banc d'optique (4) pouvant être ajusté sur une base (5), avec un dispositif de positionnement pour une pièce à usiner (1) à contrôler et des caméras maintenues dans des fixations de caméra ajustables (2) et (3), **caractérisé en ce que** :
- la caméra dans la fixation de caméra (2) pour le contrôle de la surface interne de composants de freinage et d'embrayage en céramique à carbone sous forme de disques lisses de cylindre est une caméra linéaire CCD avec au moins 1000 pixels dans la ligne CCD, laquelle peut être ajustée de manière à ce que son axe optique forme un angle avec la normale à une surface de la surface interne de la pièce à usiner (1) à contrôler de manière correspondante au positionnement de celle-ci, allant de 70° à 78°, c'est-à-dire un angle moyen *β*₂ avec la surface de la pièce à usiner (1) à contrôler de 16°, et la distance par rapport à la pièce à usiner (1) à contrôler allant de 240 mm à 340 mm en fonction du positionnement de celle-ci, une lampe à décharge avec une longueur de corps de lampe allant de 420 mm à 520 mm étant prévue pour l'éclairage, avec une plage de réglage pour la distance par rapport à la pièce à usiner allant de 70 mm à 130 mm en fonction du positionnement de celle-ci et pour l'angle formé entre le sens d'éclairage et l'axe optique allant de 25° à 35°, et
- la caméra dans la fixation de caméra (3) pour le contrôle de la surface d'une couche de frottement de composants de freinage et d'embrayage en céramique à carbone sous forme de disques lisses de cylindre étant une caméra linéaire CCD avec au moins 1000 pixels dans la ligne CCD, laquelle peut être ajustée de manière à ce que son axe optique forme un angle compris entre 18° et 26° avec la normale à une surface de la surface de la couche de frottement de la pièce à usiner à contrôler (1) de manière correspondante au positionnement de celle-ci, correspondant à un angle moyen *β*₁ de 68° par rapport à la surface de la pièce à usiner (1) à contrôler, et la distance par rapport à la pièce à usiner (1) à contrôler allant de 300 mm à 350 mm en fonction du positionnement de celle-ci, une lampe à décharge d'une longueur de corps de lampe allant de 420 mm à 520 mm étant prévue pour l'éclairage, avec une plage de réglage pour la distance par rapport à la pièce à usiner allant de 70 mm à 110 mm correspondant au positionnement de celle-ci, et pour l'angle formé entre le sens d'éclairage et l'axe optique mentionné, d'un maximum de ± 7°.
